# EUROPEAN PATENT SPECIFICATION

(11) **EP 2 724 087 B1**
(45) Date of publication and mention of the grant of the patent: **20.05.2015**
(21) Application number: 12737605.1
(22) Date of filing: 20.06.2012
(51) Int. Cl.: F24J 2/20, F24J 2/32

(54) **A SOLAR ABSORBER DEVICE AND A SOLAR PANEL INCORPORATING SAID DEVICE**
EIN SOLARABSORBER UND EIN SOLARPANEL MIT EINEM SOLCHEN SOLARABSORBER
UN DISPOSITIF D'ABSORPTION D'ÉNERGIE SOLAIRE ET UN PANNEAU SOLAIRE INCORPORANT LEDIT DISPOSITIF

(30) Priority: 23.06.2011 IT TO20110553
(43) Date of publication of application: 30.04.2014
(73) Proprietor: Zambon, Marta, 35126 Padova (IT); Piccione, Gabriella, 37045 Legnago (Verona) (IT); Brancaleoni, Paola, 37129 Verona (IT); Costa, Riccardo, 37139 Verona (IT)
(72) Inventor: ZAMBON, Marta, 35126 Padova (IT)
(74) Representative: De Bonis, Paolo
(86) International application number: PCT/IB2012/053113
(87) International publication number: WO 2012/176133

(56) References cited:
- EP-A1- 2 065 658
- EP-A2- 2 012 074
- WO-A2-2009/027700
- FR-A1- 2 942 030
- US-A- 4 066 121

## Description

### Field of invention

The present invention relates to solar absorber devices, particularly of the so-called "heat pipe" type, in which a thermovector fluid circulates which undergoes phase changes in a cyclical fashion.

In particular, the invention relates to a solar absorber device comprising a closed circuit arranged for circulation of a thermovector fluid, wherein the closed circuit comprises:
- an evaporation side of the thermovector fluid,
- a condensation side of the thermovector fluid,
   wherein, in addition:
   the solar absorber device comprises a first and a second sheet of metallic material connected to each another at areas that delimit said closed circuit,
   the evaporation side comprises a first and at least one second channel wherein said at least one second channel is in fluid communication with said first channel
- the first channel is adapted to receive the thermovector fluid from the condensation side in the liquid phase and is adapted to convey the thermovector fluid towards the at least one second channel, and
- the at least one second channel is adapted to receive the thermovector fluid from the first channel and is adapted to convey said thermovector fluid towards the said condensation side in the vapour phase.

### Description of the prior art and technical problems

The use of heat exchangers and heat pipe solar absorbers is widely known in the art. As the skilled person is well aware, a heat pipe solar absorber essentially operates as a thermal diode: the heat flow direction has a single permissible direction and the operation ends when the temperature of the condensation side significantly approximates the temperature of the evaporation side of the thermovector fluid. In the field of solar absorbers or of heat pipe heat exchangers, there are also known devices of the type that operate by gravity, i.e. wherein the circulation of the fluid is promoted by the gravitational field and wherein porous structures typical of other solutions are generally absent.

In such applications, the heat pipe solar absorbers are typically copper tubes that contain a thermovector fluid which absorbs the energy transmitted by solar radiation and transfers it to a secondary circuit, constituted for example by a fluid-preferably a liquid such as water - in a heat exchange relationship with the condensation side.

However, the known type of structure of the heat pipe solar absorbers is such that the operation thereof is limited by the phenomena of entrainment of the thermovector fluid in liquid phase in the gaseous stream constituted by the same thermovector fluid in the vapour phase which proceeds toward the condensation side.

Heat exchangers or solar absorbers made from roll-bond manufacturing technology are also known. The use of this technology is particularly interesting as the cost of production of the absorption can be greatly reduced. As known to the skilled person, roll-bond technology consists of the pressure union and hot rolling of two sheets of metal (usually aluminium-based alloys), one of which has been previously subjected to a process of selective serigraphy with the application

of anti-soldering inks at the paths of the channels that are to be incorporated into the device.

At the time of lamination only the areas delimiting the channels are soldered to each other, while thanks to the process of serigraphy just described, the area of the channels is free of connection between the two metal sheets (the serigraphy remains enclosed between the two metal sheets during the lamination). The channels are then created by pneumatic inflation which causes a bulging of the metal sheets by plastic deformation, with the subsequent formation of the aforesaid channels.

Also known, for example from WO-A-2010-092269, are solar absorber devices manufactured by roll-bond technology, integrating both the evaporation side and the condensation side.

Document EP2065658 discloses a solar absorber with a meandering circuit in the condenser part of the absorber's loop.

However, the production of a heat pipe solar absorber device with roll-bond technology presents numerous technical problems which cannot be considered as being solved by the known solutions mentioned. In particular, in the case of the manufacturing of a gravity-functioning heat pipe absorber device, equipped with a single channel, the operational limit of the device is given, as described, by the phenomenon of entrainment of the thermovector fluid in the liquid phase in the gaseous stream of the same thermovector fluid as it moves towards the condensation side. This is likely to highly restrict the heat pipe transferable heat flow, in that, essentially, the thermovector fluid in liquid phase disturbs the thermovector fluid in the vapour phase which moves in the same single channel, in counter current with respect to the liquid fraction.

In addition, the situation is further worsened by the typical dimensions and shapes of the channels that can be obtained with roll-bond technology. In particular, the channel sections obtainable by inflation in a roll-bond manufacturing process tend to have a flattened elliptical shape with one semi axis much greater than the other, so that one dimension predominates over the other.

For example, typical dimensions of the major and minor axes of the ellipse associated with the channel section channel obtained are 10 x 3.5 mm, which corresponds to a maximum transmittable heat flow of 10W. Beyond this value the phenomenon of entrainment described above severely restricts the operation of the device. That is, it is insufficient for most applications, which require at least 60/70W of transferred heat flow. It is also observed that the elliptical section dimensions as set out above are imposed by technological limitations of the manufacturing process adopted.

If the reduced passage section is already critical for the onset of entrainment phenomena, the situation is further aggravated by the phenomena that affect the areas of the elliptical section located at opposite ends of the major axis. From a geometrical point of view, this refers to areas wherein the adverse effects of surface tension of the liquid are greater, which could in some way favour the presence of thermovector fluid in the liquid phase at these areas.

However, even these areas tend to be occupied by vapour, as they are very hot areas because they are situated at the interface with relatively extended flat zones of the metal sheets that act, under the effect of solar radiation, as fins, in this way absorbing a considerable amount of heat flow.

It follows that the thermovector fluid in liquid phase is forced to flow only in the lower part of the elliptical section, with consequent lowering of the transmittable heat flow. Moreover, in correspondence of the interface area between the evaporation side and the condensation side, the amount of vapour is much higher than in other areas, with the result that the vapour occludes the channels, severely limiting the circulation of the liquid within them.

To solve these problems in the field of the prior art there are two variants of heat pipe solar absorbers, respectively called "groove heat pipe" and "pulsating heat pipe". The first solution cannot be manufactured with roll-bond technology, while the second solution, which consists in causing thermovector fluid motion by means of induced pulses therein in areas wherein the fluid is biphasic, presents considerable problems in terms of heat flow control and in terms of fatigue stress of the structure, evidently due to the pulsations.

An additional fact is that the operation of a heat pipe absorber device is similar to that of a diode, i.e. the fluid flow can only proceed in one direction. Problems arise when the amount of vapour inside the absorbing device is large enough to render the circulation of the liquid almost impossible, even whereby the entire thermovector fluid within the heat pipe is in the vapour phase. In this case, the heat flow transmitted by the solar absorber device becomes rapidly uncontrollable.

### Object of the present invention

The object of the invention is to solve the technical problems mentioned above. In particular, the object of the present invention is to provide a solar absorber device, specifically manufactured through roll-bond technology, which does not suffer from the operating limits due to entrainment phenomena in the thermovector fluid and which also does not suffer from the problems of uncontrollability of the heat flow that is made available at the condensing section for outward transfer.

### Summary of the invention

The object of the invention is achieved by a solar absorber device having the features forming the subject of the following claims, which form an integral part of the technical disclosure herein provided in relation to the invention.

In particular, the object of the invention is achieved by a solar absorber device having all the features listed at the beginning of the present description and further characterized in that the condensation side comprises a reservoir in fluid communication with the first and the at least one second channel, respectively, at an outflow port and at least one inflow port thereof, and further characterized in that the at least one second channel is in fluid communication with the reservoir through at least one siphon duct comprising a first and a second bend fluid dynamically arranged in series.

### Brief description of the figures

The invention will now be described with reference to the attached drawings, provided purely by way of non-limiting example, wherein:
- Figure 1 is a perspective view of a solar absorber device according to an embodiment of the present invention,

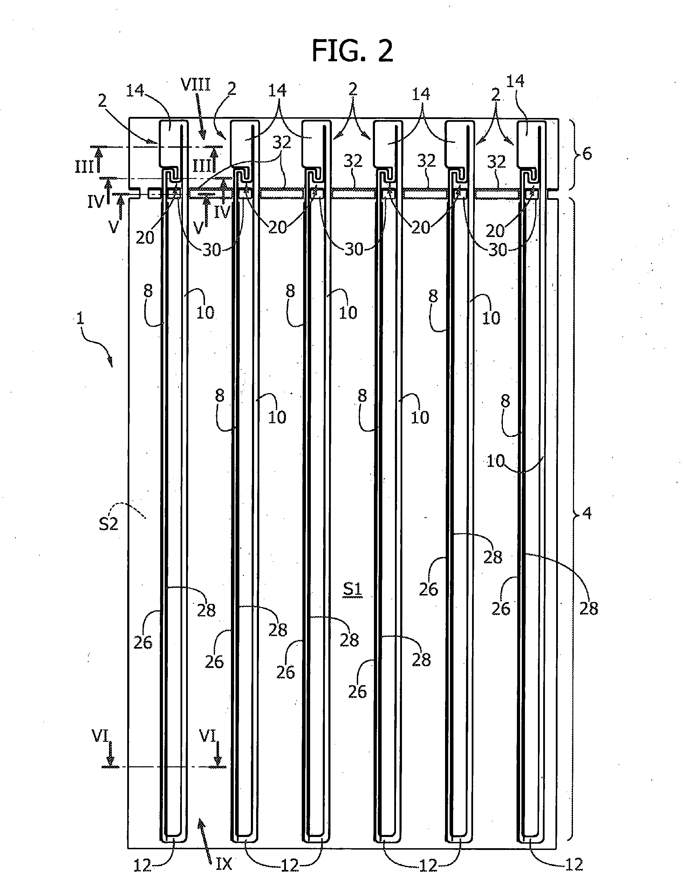

- Figure 2 is a plan view according to arrow II of Figure 1,
- Figures 3, 4, 5, 6 are partial sectional views according to, respectively, the lines III-III, IV-IV, VV, and VI-VI of Figure 2,
- Figure 7 is a plan view according to arrow VII in Figure 1,
- Figures 8, 9 are enlarged views of details indicated, respectively, by the arrows VIII and IX in Figure 2,
- Figure 10 is a plan view of a variant of the solar absorber device of Figures 1 to 9,

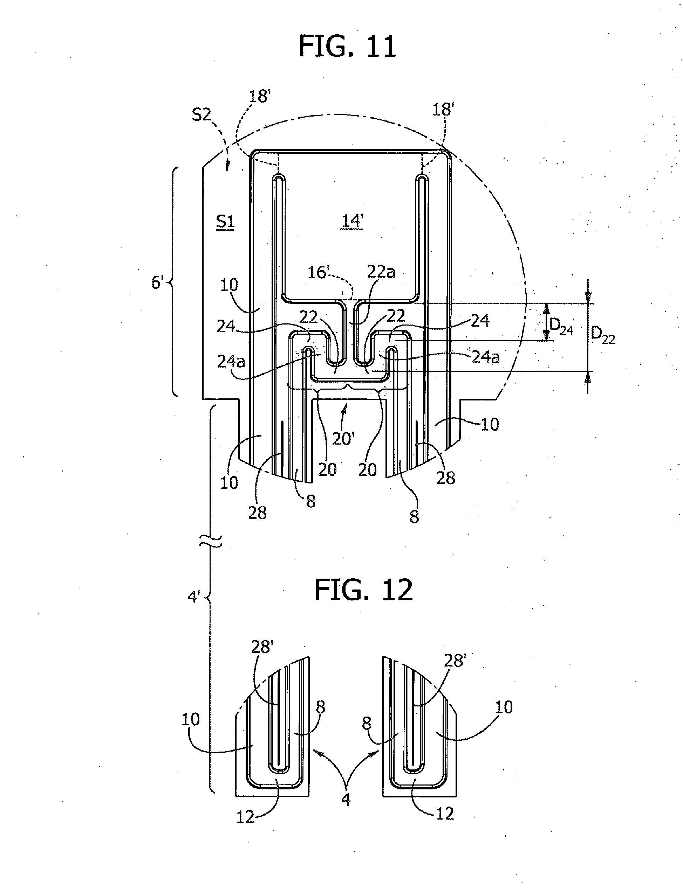

- Figures 11 and 12 are enlarged views of details indicated, respectively, by the arrows XI and XII in Figure 10,
- Figure 13 shows a further embodiment of a solar absorber device according to the invention,
- Figures 14 and 15 are enlarged views of details indicated by the arrows XIV and XV in Figure 13,
- Figure 16 illustrates a solar absorber device according to yet a further embodiment of the invention,
- Figure 17 illustrates a solar absorber device according to yet a further embodiment of the invention,
- Figure 18 illustrates a solar absorber device according to yet a further embodiment of the invention, and
- Figures 19, 20 are enlarged views of details indicated, respectively, with arrows XIX, XX in figure 18.

### Detailed description

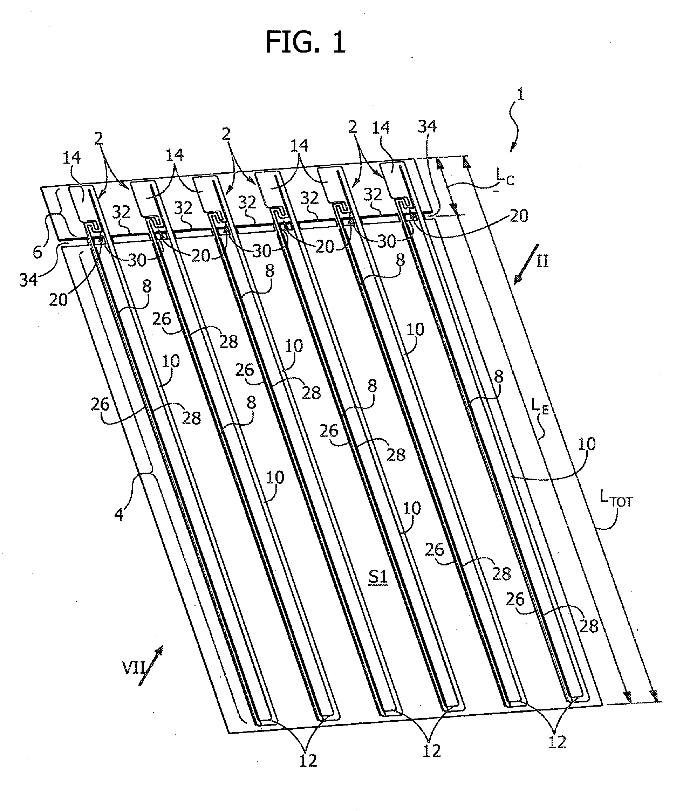

In Figure 1 the reference number 1 indicates a solar panel comprising a plurality of solar absorber devices 2 according to a preferred embodiment of the present invention. Each solar absorber device 2 is of the heat pipe type and comprises a closed circuit in which a thermovector fluid circulates. The closed circuit of each solar absorber device 2 comprises an evaporation side of the thermovector fluid indicated by the reference number 4 and a condensation side of the thermovector fluid indicated by the reference number 6.

The evaporation side 4 comprises a first channel 8 and at least one second channel 10, which in this embodiment are developed parallel to each other and are each in fluid communication by means of .an essentially U-shaped connecting portion.

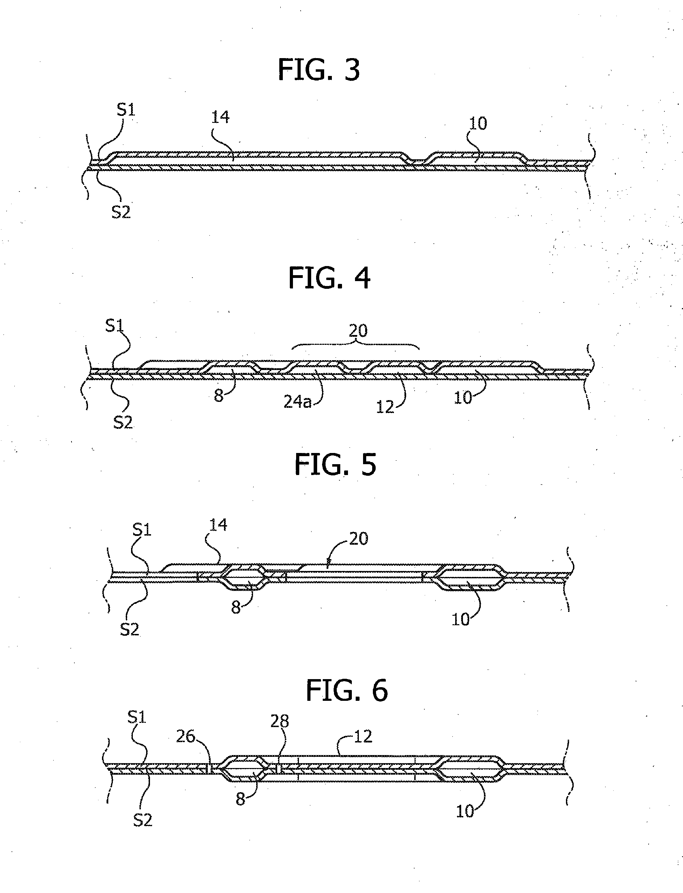

The first channel 8, also with reference to Figure 5 and Figure 6, has a lower passage area than the second channel 10. In addition, both channels 8,10 have markedly flattened oblong-shaped sections with a major axis substantially larger than the minor axis.

Channels 8,10 extend for almost the entire length of each solar absorber 2 and also for a portion of the condensation side 6. In addition, named L_{C} and L_{E} the lengths of the condensation and the evaporation sides, respectively, of each individual solar absorber 2, and named L_{TOT} the sum thereof, typical values are:
- between 0.03 and 0.2 for L_{C}/L_{TOT}
- between 0.97 and 0.8 for L_{E}/L_{TOT}.

The condensation side 6 comprises a reservoir generally indicated by the reference numeral 14 to which the first and second channels 8,10 are hydraulically connected. The term "reservoir" used in this description generally intends to designate a portion of the closed circuit of each absorber device 2, characterized by dimensions (in particular passage area) appreciably greater than the size of the channels 8,10, so as to essentially introduce a localized hydraulic capacity within the closed circuit of each absorber 2.

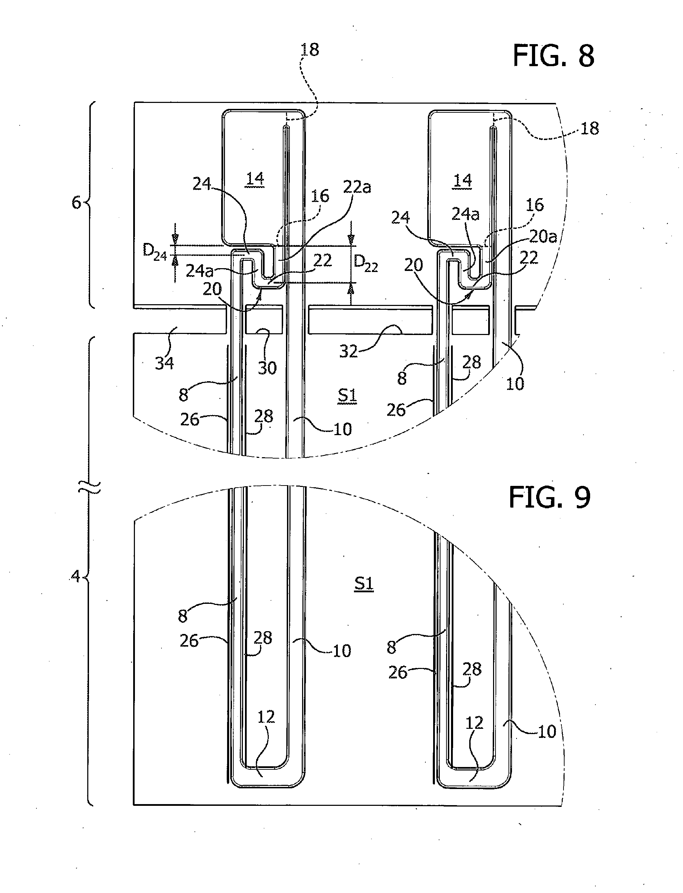

In particular, with reference to Figure 8, the reservoir 14 includes an outflow port 16 in fluid communication with the first channel 8 and an inflow port 18 in fluid communication with the second channel 10. In greater detail, the channel 8 is in fluid communication with the outflow port 16 by a siphon duct generally designated by the reference numeral 20. The outflow port 16 is located at a lower geometric height than the inflow port 18. In particular, the outflow port 16 is essentially located at the bottom of reservoir 14 while the inflow port 18 is located at the top of reservoir 14 itself. In other embodiments the position of the outflow port may be located elsewhere, for example below the top of reservoir 14 or about halfway up, while the outflow port 16 may be located, for example, in a lateral position.

The siphon duct 20 comprises a first and a second bend 22, 24 (Figure 8) arranged fluid dynamically in series and such that the first bend 22 is located at a distance D₂₂ from the reservoir 14 that is greater than the distance D₂₄ of the second bend 24 from the reservoir 14. The result is essentially that of an "S-shaped" connecting duct wherein the bend 22 has a lower geometric height than the bend 24. The meaning of "geometric height" will be made clearer in the description which follows and is also linked to the mode of operation of the solar absorber device 2.

In further detail, the siphon duct 20 has a structure such that an outflow stretch 20a departs from the outflow port 16 which leads to the bend 22, creating a first curve of amplitude essentially equal to 180° which leads into an upflow stretch 24a. The upflow stretch 24a then leads into the bend 24 which creates a second curve of about 180° that then leads directly into channel 8.

The solar panel 1 and in general each absorbing device 2 is manufactured by roll-bond technology. In greater detail, with reference to Figures 3 to 6, each solar panel 1 (and absorber device 2) comprises a first and a second sheet made of metallic material S1, S2 joined to one another by means of pressing and hot lamination processes at the delimiting areas of the closed circuit of each absorber 2. Essentially, the sheets S1 and S2 are joined to one another everywhere except at the areas corresponding to the portions of the circuit of each absorber 2, which are instead occupied by the channels 8, 10, by the siphon duct 20 and by the reservoir 14.

As previously mentioned, the soldering of the sheets S1, S2 takes place after the application of a serigraphy (for example with anti-soldering inks) with a pattern that reproduces the path and the topology of the closed circuit of each absorber 2 in plan view. The sheets S1 and S2, preferably of aluminium alloy, are then subjected to pressing and hot lamination which essentially causes the soldering of the sheets S1 and S2 wherever the above-mentioned serigraphy is not applied. In this way, areas remain that are not soldered to each other in correspondence of the closed circuit of the absorber 2.

Subsequently, the injection of fluid under pressure is envisaged (typically between 90 and 130 bar) between the sheets S1 and S2 which causes a plastic deformation and an outwards bulging of the portions of said sheets whereon the serigraphy is present, in this way forming hollow volumes between the sheets S1 and S2 having a shape corresponding to that of the closed circuit of each solar absorber 2.

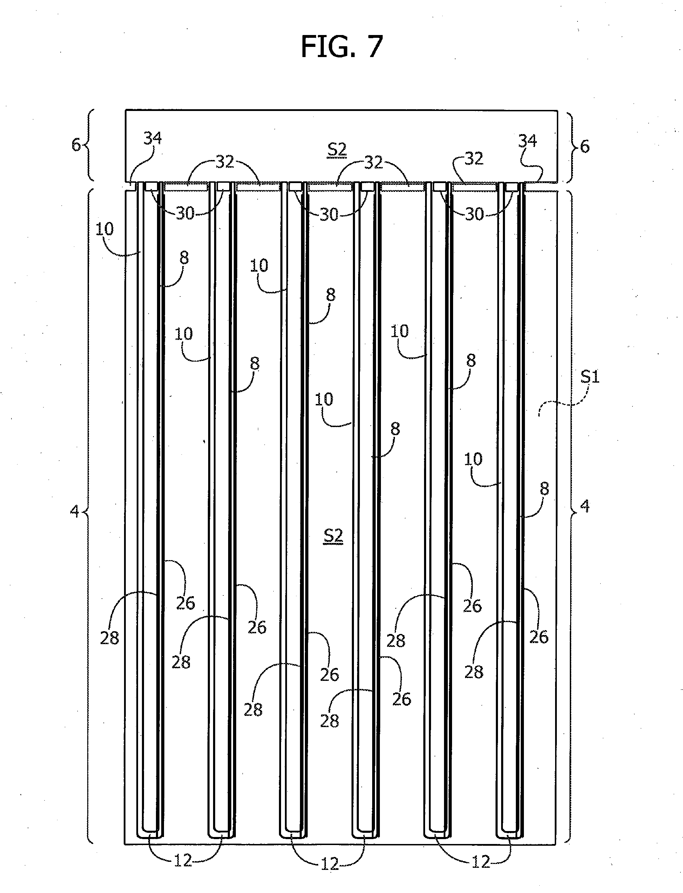

With reference to Figures 3 to 6 and to Figure 7, it is to be noted that in correspondence of the condensation side 6 (see in particular Figures 3, 4, 5 and Figure 7) only one of the sheets S1, S2 - in particular sheet S1 - bulges outwards in correspondence of the areas whereat the elements of the closed circuit of the absorber 2 are arranged, so that the condensation side 6 has, on the side of the sheet S1, an essentially three-dimensional structure which exhibits the reservoirs 14, part of the channels 8, 10 and the siphon duct 20 in relief, while in correspondence of the sheet S2, i.e. on the opposite side, it is substantially flat (Figure 7). Instead, the evaporation side 4 preferably exhibits both sheets S1 and S2 bulging outwards in order to create the channels 8,10, so that the evaporation side 4 has surfaces with an essentially three-dimensional structure, that is with the channels 8, 10 in relief, both in correspondence of the sheet S1 and in correspondence of the sheet S2.

In this way, the channels 8, 10 not only have different cross-sections to each other, but also have variable cross-sections in the transition from the condensation side 6 to the evaporation side 4, wherein in the passage from one side to the other, the passage area essentially doubles.

It is noted that in alternative embodiments it is possible to envisage that only the sheet S1 bulges outwards, essentially obtaining a perfectly flat surface of the back of panel 1 (corresponding to the sheet S2).

In general, it is preferable that the entire closed circuit of the solar absorber device 2 develops with a planar geometry, in particular with regard to the condensation side 6. However, in alternative embodiments it is possible to envisage a bending such as to bring a circuit section essentially corresponding to the area where the connecting portion 12 is located, to be tilted by a certain angle with respect to the remaining portion of the evaporation side 4. The usefulness of such a variant will be discussed later.

Preferably, in the embodiment described herein and in other alternative embodiments, the first channel 8 is bordered by a pair of thermal interruptions identified by reference numerals 26, 28, essentially situated on opposite sides of channel 8. By the term "thermal interruption" it is meant a physical interruption, an insert or a carryover of thermally insulating material that acts to limit the conductive heat exchange between the channel 8 and the surrounding areas. In a preferred embodiment the thermal interruptions 26, 28 are made by laser cutting.

Moreover, again preferably, at a border area between the evaporation side 4 and the condensation side 6 a plurality of openings is provided, indicated with reference numbers 30,32. In particular, each opening 30 is positioned between the first channel 8 and the second channel 10 of each solar absorber 2, while each opening 32 is located between the channel 10 and the channel 8 of two adjacent solar absorbers 2. At the ends of the array of solar absorbers 2, a pair of recesses is also provided, with the same function, indicated with the reference number 34.

In this way, an "adiabatic zone" is essentially defined, designed to minimize the conductive thermal exchange between the evaporation side 4 and the condensation side 6. Openings 30, 32 are preferably made by laser cutting.

Still preferably, in correspondence of the first channel 8 the surface of sheets S1, S2, or at least the surface of the sheet intended to be directly exposed to solar radiation, is coated with a reflective or thermally insulating material (or with both properties), which can be applied mechanically or by gluing, applied either by chemical or physical processes.

The operation of the solar panel 1 of each solar absorber 2 is as follows.

The solar panel 1 is adapted for installation on a supporting structure such as, but not exclusively, the roof of a building in such a way that the condensation side 6 has a higher geometric height than the evaporation side 4. This is because each solar absorber device 2 essentially operates by gravity. This furthermore clarifies the reference to a "geometric height" for the bends 22, 24.

Moreover, for example for application in locations with latitudes between the two tropics, one can obviate to the substantial variation of the solar exposure conditions by providing supporting frames with adjustable orientation.

Not only that, the solar panel 1 is preferably coupled to devices that allow to transfer heat flow from the condensation zone 6 to a fluid, e.g. water, separated from the thermovector fluid within the absorber devices 2. Such devices may include, for example, a header that is fixed to the condensation side 6 at sheet S2, i.e. in an area where the surface of sheet S2 is flat. Furthermore, preferably, it is the side S2 that is directly exposed to solar radiation, while side S1 is arranged in the shade. It should also be noted that reservoirs 14 are shaded, because the header is fixed on side S2 in correspondence of the reservoirs, so that they cannot receive solar radiation.

The thermovector fluid that circulates within the circuit of each absorber device 2 undergoes two phase changes, one inside the evaporation side 4, and one inside the condensation side 6. In particular, the first channel 8 is adapted to receive thermovector fluid in the liquid phase from the reservoir 14 through the siphon duct 20. In particular, when thermovector fluid flows from reservoir 14 through the outflow port 16, it enters the siphon duct 20, undergoing a rapprochement to the reservoir 14, after covering the path along the outflow stretch 20a, the first bend 22 and the upflow stretch 24a, and a subsequent distancing as a result of the covering of the path along the bend 24, after which the fluid is directed towards the channel 8.

The thermovector fluid flows through the channel 8 along its entire length without undergoing any passage in the vapour phase. This is possible thanks to the combined action of the thermal interruptions 26, 28 and the coating of reflective or thermally insulating material (or as mentioned, having both properties) present on the surface of each solar absorber device 2 in correspondence of the channel 8.

In fact, the presence of thermal interruptions 26, 28 lowers the temperature at the end regions of channel 8 at the interface between sheets S1 and S2 because it limits the heat transmission by conduction from the surface of the sheets S1, S2 surrounding the channel 8 itself.

Note that this solves one of the main problems of the known type of devices, because in the latter the overall performances are severely limited by phenomena of entrainment and excessive presence of vapour in the circuit, amplified by heat transmission by conduction of the absorber portions surrounding the channel 8, which as described, essentially function as fins.

The coating of reflective and/or thermally insulating material at channel 8 contributes to shielding with respect to the heat flow by radiation that enters the system, and prevents the premature evaporation of the thermovector fluid inside absorber 2, which is likely to limit the performance of the absorber itself, affecting the possibility for heat flow transmission to the outside.

The second channel 10 is then adapted to receive thermovector fluid still in the liquid phase:from the first channel 8 through the connecting portion 12. In the absence of thermal interruptions and a reflective and/or thermally insulating coating at the second channel 10, favourable conditions are created in order for the incident solar radiation on the solar panel 1 and on the absorber 2 at the outer surface of the sheet S2 to transfer a sufficient amount of heat to the thermovector fluid to cause its evaporation inside the channel 10.

From here, the thermovector fluid is conveyed in the vapour phase toward the condensation side 6. Here the thermovector fluid undergoes a second phase change due to the action of liquid flowing in the header coupled to the panel 1, and it is in a heat exchange relationship with the condensation side 6, which absorbs heat flow from thermovector fluid in the vapour phase, causing its condensation. Downstream of the condensation, the thermovector fluid is transferred into the liquid phase inside the reservoir 14 and the cycle just described restarts with the modalities already detailed.

The presence of the siphon duct is very important in view of maintaining the correct operation of each solar absorber device 2 even in harsh working conditions. In fact, among the main problems of the known devices it has been acknowledged the possibility that all the thermovector fluid within the absorber device 2 undergoes evaporation, passing to vapour phase. As mentioned, this is an undesirable effect since it makes the heat flow that is transferred to the outside through the condensation side 6 highly uncontrollable.

Thanks to the siphon duct 20 the presence of a certain amount of liquid in the circuit is guaranteed, in particular in the bend 22 and in at least one section upstream of it, i.e. in part of the reservoir 14, preventing anomalies in the operation of the solar absorber device 2.

The bend 22 is located at a lower geometric height than the bend 24 and it is therefore adapted to maintain a certain amount of thermovector fluid in the liquid phase even if vapour of thermovector fluid were to form into the channel 8. The operation is basically similar to that of the siphon ducts used, for example, in drains of sinks for kitchens and consequently such siphon ducts inserted in the circuit shown above prevent the backflow of thermovector fluid in the vapour phase in the opposite direction to that desired.

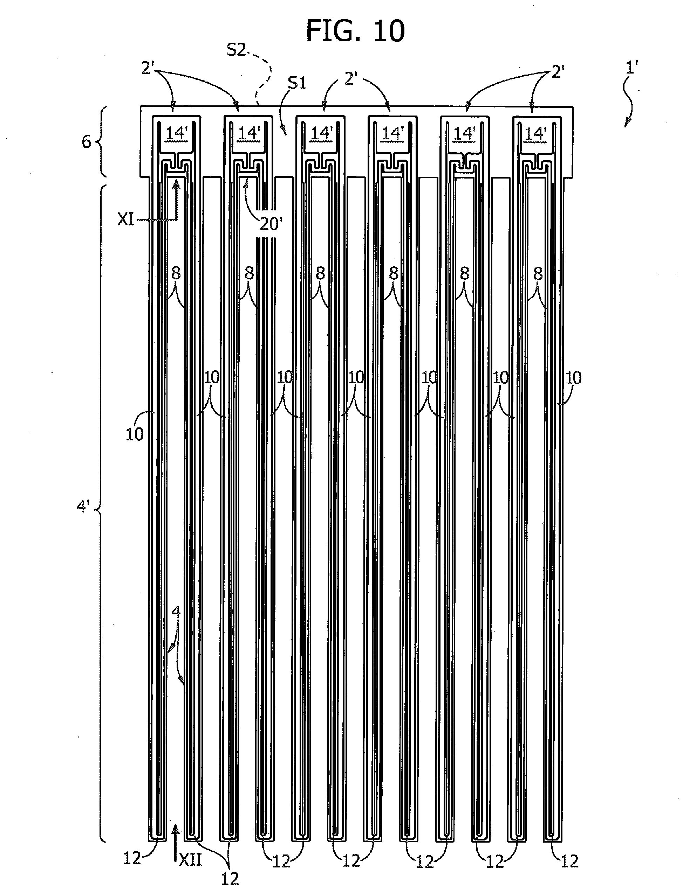

In Figure 10 the reference number 1' indicates a variant of the solar panel 1 comprising a plurality of solar absorber devices 2' essentially obtained by means of the union of the circuits of two solar absorbers 2 and wherein the reservoirs and the siphon ducts have been made into common parts.

In particular, each solar absorber device 2' includes an evaporation side 4', essentially comprising the union of two evaporation sides 4, each including the channel 8, the channel 10 and the connecting portion 12, and a condensation side 6' including a reservoir 14' having a single outflow port 16' and a pair of inflow ports 18' located on opposite sides of the reservoir 14'.

This because the channels 10 of each solar absorber 2' flow into the reservoir 14' from opposite sides and externally with respect thereto, while channels 8 both flow into the outflow port 16' and are connected thereto it by means of a double siphon duct 20' including two siphon ducts 20 joined together. In particular, the double siphon duct 20' comprises a single outflow stretch 20a leading to two first bends 22 which branch off from the outflow stretch 20a as a bifurcation, and to which two second bends 24 are fluid dynamically connected in series which lead directly into a corresponding one of the two channels 8.

All the geometric indications (distances D₂₂, D₂₄), positional indications (geometric height of the bends 22 with respect to the bends 24), those relating to the path characteristics (180° curves made by the bends 22, 24) and functional indications (maintenance of the liquid inside the reservoir 14') previously described apply.

It should be noted that in this variant the evaporation side 4' comprises a plurality of evaporation sides 4 arranged substantially on separate appendages formed on separate sheets S1 and S2, for example by laser cutting. In this way, when viewed in plan, the solar panel 1' is shown to essentially have a "comb-like" shape, wherein the teeth of the comb are constituted by the evaporation sides 4 (or, equivalently, by pairs of sides 4') comprising the channels 8, 10 arranged on the respective appendages.

In this way, each channel 8, 10 is surrounded by a minimal amount of material of sheets S1, S2 so that there is no need to use a thermal interruption on both sides of channel 8 to ensure optimal thermal insulation with respect to the rest of the structure. In fact only one thermal interruption 28' is present, located between each channel 8 and the channel 10 immediately adjacent, with the function of thermally insulating the channel 8 with respect to the channel 10.

The operation of the solar panel 1', as well as the manner in which it is installed on a support structure such as, for example, the roof of a building, are essentially analogous to those of the solar panel 1 and the absorbers 2, since it functionally consists of the union of several solar absorbers 2.

In particular, thermovector fluid from the reservoir 14' flows through the double siphon duct 20' and enters channels 8 in the liquid phase. From these it is conveyed, still in the liquid phase, towards the corresponding channels 10. Again, the evaporation in channels 8 is avoided by the presence of a coating of a reflective and/or thermally insulating material in correspondence thereof.

In channels 10, as previously described, the evaporation of thermovector fluid occurs, which undergoes a subsequent condensation at the condensation side 6 due to the passage of a second fluid which absorbs the dispersed heat flow.

Even in this case the double siphon duct 20' has the function of maintaining anyway a certain amount of liquid in the circuit of each absorber 2' even in the presence of strong, irradiation by solar radiation, since bend 22 has a lower geometric height than bends 24, and both have a geometric height lower than that of the reservoir 14', which by gravity ensures the maintenance of a certain quantity of fluid at least in the outflow stretch 20a and in the bends 22, as well as in a part of the reservoir 14' itself.

Also of note is that the comb-like shape of the solar panel 1' makes the insertion of each of the evaporation sides 4 in a respective vacuum tube possible, which essentially forces each solar absorber 2 to function via heat exchange by radiation. In this way, the evaporation side 4 is constituted by an array of vacuum tubes fitted on each of the appendages where channels 8, 10 are formed.

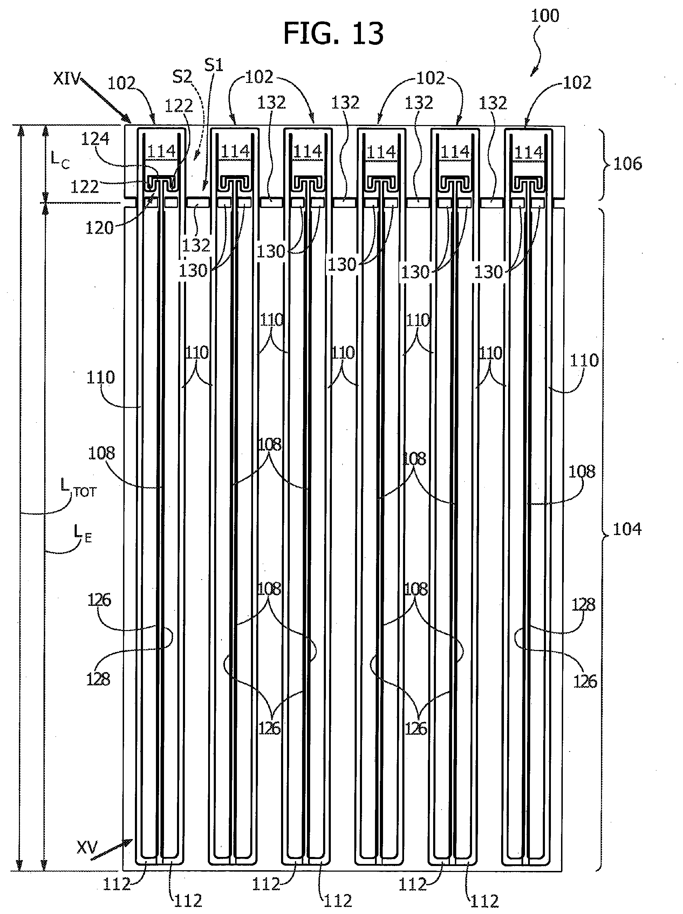

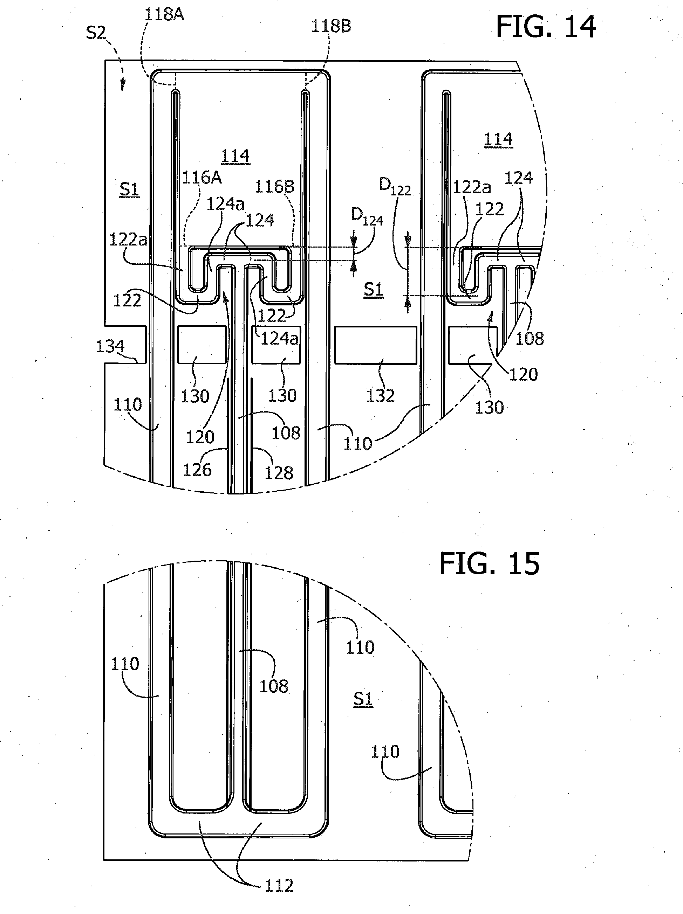

Further embodiments of a solar panel and a solar absorber device according to the invention are indicated in figures 13 to 15 with, respectively, reference numbers 100, 102. Each solar absorber 102 included in the solar panel 100 is made by joining sheets S1 and S2 by roll-bond technology and comprises an evaporation side 104 and a condensation side 106. The evaporation side 104 comprises a first channel 108, a second and a third channel, both indicated with the reference number 110, arranged on the opposite side with respect thereto and fluid dynamically connected through a pair of connecting portions 112. Each channel 108 is hydraulically connected to a reservoir 114 situated in the condensation side 106, in particular at a first and a second outflow port 116A, 116B.

The connection between each of the outflow ports 116A, 116B and the channel 108 is created by means of a doubled siphon duct 120, leading into the channel 108. In particular, the siphon duct 120 comprises
- A first and a second outflow stretch 122a, connected to the respective outflow ports 116A, 116B, leading into a respective first bend 122,
- A first and a second upflow stretch 124a departing from the corresponding first bend 122 and leading into a respective second bend 124, wherein the second bends 124 directly lead into the first channel 108.

Each channel 110 is instead in fluid communication with the corresponding reservoir. 114 at a first and a second inflow port 118A, 118B arranged on opposite sides with respect to the reservoir 114 and at a higher geometric height respect to the outflow ports 116A, 116B.

The bend 122 is located at a distance D₁₂₂ from the reservoir 114 that is greater than a distance D₁₂₄ of the bend 124 with respect to the same reservoir 114.

The bends 122, 124 are functionally equivalent to the bends 22, 24 and therefore all remaining geometric indications, relating to position and to the path characteristics (180° curves created by bends 122, 124) and functional indications (maintenance of liquid within the reservoir 14') previously described apply.

A pair of thermal interruptions 126, 128 is also provided on opposite sides of each channel 8 and a plurality of openings 130, 132 at a border area between the evaporation side 104 and the condensation side 106. In particular, the openings 130 are arranged between each channel 108 and channels 110 while the openings 132 are arranged between adjacent channels 110.

The operation of each solar absorber device 102 is functionally analogous to that of the solar absorber devices previously described, with the thermovector fluid in the liquid phase being received by channels 108 and carried to corresponding channels 110. Unlike the solutions previously described, the flow of the liquid thermovector fluid within the channel 108 is divided between the two channels 110 of each solar absorber 102.

Preferably, also in this embodiment the application of reflective and/or thermally insulating material at channels 108 (at least on one of the sheets S1, S2) is envisaged, thanks to which the thermovector fluid arrives at the channels 110 in liquid phase, within which it undergoes evaporation due to the heat flow absorbed by the solar radiation. From these channels, the thermovector fluid undergoes a subsequent condensation in the condensation side 106 by heat exchange with the liquid, e.g. water, which impinges upon the condensation side 106.

Similarly to the previous solutions, the reservoir 114 and siphon ducts 120 ensure the presence of a certain amount of water in the system even under particularly harsh operating conditions wherein there is a risk of evaporation of the entire amount of thermovector fluid within each solar absorber device 2.

Again, similarly to the solutions described above, the openings 130, 132 minimize the structural continuity between the condensation and evaporation sides in order to reduce the conductive thermal exchanges between the two portions of the solar panel.

Also in this case, thanks to the flexibility offered by the roll-bond technology, it is possible to manufacture, with regard to the evaporation side 104, volumes defining the circuit of the solar absorber 102 only by means of outward bulges of the sheet S1, or, preferably, by means of outward bulges of both sheets S1, S2 according to requirements. With regard to the condensation side 106, the bulges are preferably provided solely on sheet S1, while maintaining a flat surface at sheet S2 suitable for engagement with a header wherein the fluid flows in a heat exchange relationship with the condensation side 106.

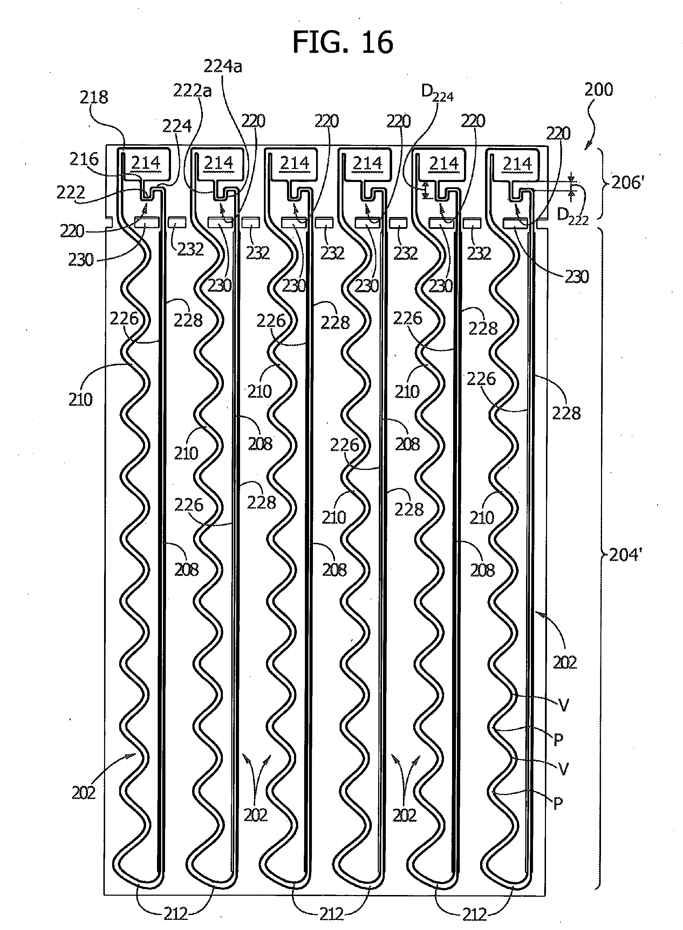

With reference to Figure 16, reference numbers 200 and 202 indicate, respectively, a solar panel and a solar absorber device according to a further embodiment of the invention.

The solar panel 200 comprises a plurality of solar absorber devices 202, each comprising a closed circuit including an evaporation side 204 and a condensation side 206. The evaporation side 204 includes a first channel 208, with an essentially rectilinear development, and having the same function of the channels 8, 108, and a second channel 210 with an essentially serpentine form, the shape of which comprises an alternation of peaks and valleys indicated by the letters P and V. The channels 208, 210 are in fluid communication with each other via a connecting portion 212.

The valleys V correspond to portions of the channel 210 closer to the channel 208 while the crests P correspond to portions of the channel 210 further from the channel 208 itself.

The channels 208, 210 are in fluid communication with a reservoir 214 formed on the condensation side 206 by means of an outflow port 216 and an inflow port 218, respectively, situated at a greater geometric height than the outflow port 216. Similarly to the solutions described above, the outflow port 216 is in fluid communication with channel 208 via a siphon duct 220, comprising a first bend 222 and a second bend 224, fluid dynamically in series, and arranged at different geometric heights, in particular the bend 224 is arranged at a greater geometric height than the bend 222 and it is therefore closer to the reservoir 214. This means that a distance D₂₂₂ of the first bend 222 with respect to the reservoir 214 is greater than a distance D₂₂₄ of the second bend 224 with respect to the same reservoir 214. From the outflow port 216, an outflow stretch 222a departs, which flows into the corresponding bend 222, from which an upflow stretch 224a departs which in turn flows into the bend 224, flowing into the channel 208.

The bends 222, 224 are functionally identical to the bends 22, 24, therefore all geometric indications, positional indications, relating to the path characteristics (180° curves created by bends 222, 224) and functional indications (maintenance of liquid within the reservoir 214) previously described apply.

Thermal interruptions 226, 228 are arranged on opposite sides of channel 208 along its entire length and have the same function as thermal interruptions 26, 28 and 126, 128 previously described.

Moreover, the solar panel 200 is also manufactured by means of roll-bond technology through the union of two metal sheets S1, S2 at areas delimiting the closed circuit for the thermovector fluid.

Preferably both the sheets S1 and S2 bulge outwards in correspondence of the portions of the closed circuit of each solar absorber 202 only at the evaporation side 204 (channels 208 and 210), while the condensation side 206 has a flat surface in correspondence of the sheet S2 and bulges outwards-with a structure having a three-dimensional surface in relief (reservoir 214, siphon ducts 220 and end portions of the channels 208, 210) - in correspondence of the sheet S1.

A plurality of apertures 230, 232 is also provided in a border area between the evaporation side 204 and the condensation side 206, respectively, between the channels 8, 10 and the adjacent solar absorbers 2, with the same function as the apertures 30, 32 and 130, 132. Analogously to the previous solutions, a layer of reflective and/or thermally insulating material is preferably arranged on each solar absorber 2 in correspondence of the channel 208.

The operation of the solar panel 200 and the solar absorbers 202 is analogous to that of the solar panels of the solar absorbers already described, and envisages that the channels 208 receive thermovector fluid in the liquid phase from the reservoir 214, conveying said fluid to the corresponding channel 210. Evaporation of the fluid in the channels 208 is avoided by the presence of thermal interruptions 226, 228 and by the layer of reflective and/or thermally insulating material deposited in correspondence of the channel 208.

The second channel 210 receives the thermovector fluid from the channel 208 in the liquid phase and evaporation is achieved within the channel due to solar radiation incident thereon.

The thermovector fluid in the vapour phase flows to the condensation side 6 where it undergoes a phase change which brings it back to the liquid phase (condensation) thanks to the action of the fluid, particularly water, which impinges upon the condensation side 206 (said fluid can flow for example, in a header coupled to the flat surface of the sheet S2 at the condensation side 206, as already described for the condensation sides 6, 106).

The siphon duct 220 performs the same function and has the same effect of maintaining a geometric height of residual liquid within the absorber device 202 already described for the previous embodiments/variants.

The solar absorbers manufactured according to any one of the embodiments of the invention, not necessarily limited to those described herein by way of example, present a number of advantages compared to known devices.

In particular, the performance deficiencies of solar absorbers of the heat pipe type manufactured with roll-bond technology present in the prior art are overcome thanks to the adoption of the reservoir and the siphon duct thereof with the channel adapted to convey thermovector fluid in the liquid phase.

In this way, the heat flow transferred to the fluid that is in heat exchange relationship with the condensation side of each solar absorber is still controllable even under harsh operating conditions.

Furthermore, by having the channels 8, 108, 208 separated from respective channels 10, 110, 210, a separation is achieved between the circuit side wherein thermovector fluid flows in the liquid phase, and the circuit side wherein thermovector fluid flows in the vapour phase, which eliminates the problems of entrainment of thermovector fluid in the liquid phase that affects known type of devices.

Moreover, the arrangement of a layer of reflective and/or thermally insulating material in correspondence of the channel, wherein the thermovector fluid flows in the liquid phase, reduces the chances of premature evaporation of the thermovector fluid, thus allowing to operate even in the presence of high heat flows absorbed from the solar radiation coming to a loss of control of the cycle run by the thermovector fluid within each absorber.

Furthermore, taking advantage of the countless possibilities offered by roll-bond technology production, it is possible to obtain any path for the channels of the liquid and the vapour, and it is also possible to envisage solar panels that have a preferably flat structure in correspondence of the reservoirs and the siphon ducts but possibly a curved or polyhedral structure at the evaporation side. It is possible, for example, to arrange the channels through which the liquid thermovector fluid flows on different planes with respect to the channels wherein the thermovector fluid flows in the vapour phase, simply by bending the sheet metal of the solar panel along an axis located between the two channels.

It is also possible, as mentioned, to provide a bending of the sheet metal immediately upstream of the connecting portions 12, 12', 112, 212, so that the portion of the corresponding panel results as being inclined with respect to the remaining part of the panel.

This is particularly advantageous in the case of installation of the solar panels on the roof of a building. It is in fact possible to install the solar panel so that the band of solar panel bent at the connecting portions 12, 12', 112, 212 is in abutment against the lower end of one of the slopes of a roof, so that it results as being in the shade and further ensures that the evaporation of the thermovector fluid does not occur before the fluid has entered the vapour channel 10, 10', 110, 210.

Naturally, the details of construction and the embodiments may be widely varied from what is described and illustrated herein purely by way of example, without thereby departing from the scope of the present invention, as defined by the accompanying claims.

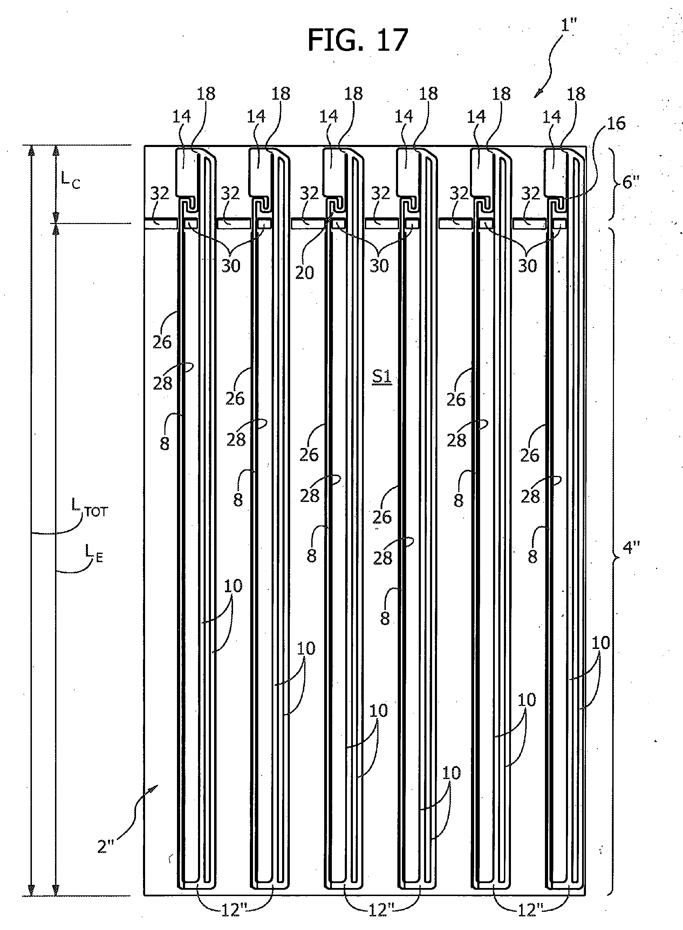

For example, with reference to Figure 17, the reference number 1" indicates a solar panel incorporating one or more solar absorber devices 2" according to a further embodiment of the invention. The components identical to those previously described are indicated with the same reference number and have the same function.

Each solar absorber device 2" comprises an evaporation side 4" and a condensation side 6". The evaporation side 4" includes a first channel 8, and two channels 10 that branch from a connecting portion 12" and lead into the inflow port 18.

The channel 8 is adapted to convey thermovector fluid in the liquid phase towards the channels 10, in which said thermovector fluid evaporates and is conveyed in the vapour phase to the reservoir 14. The connection between the channel 8 and the reservoir 14 is made through the siphon duct 20. The solar panel 1" is produced by roll-bond technology.

Note that it is even possible to provide embodiments comprising a first channel 8 and more than two second channels 10. The channels 10 may all lead into the same inflow port 18 or may lead into different inflow ports 18, for example one for each channel, or channels 10 may lead into groups towards corresponding inflow ports.

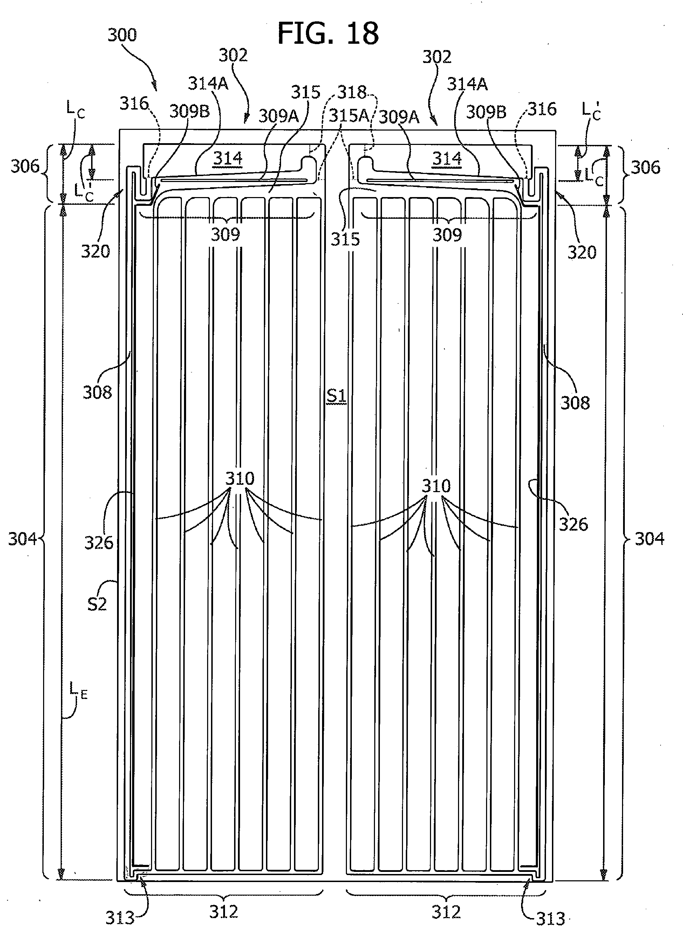

In figure 18 a solar panel incorporating two solar absorbers 302 according to another further embodiment of the invention is indicated with the reference numeral 300. Of course it is possible to foresee a different number of solar absorber devices 302 of each solar panel 300, from a minimum of one to a maximum depending on the size of the panel itself.

Each solar absorber device 302 includes a closed circuit arranged for the circulation of a thermovector fluid and including an evaporation side and a condensation side of the thermovector fluid indicated, respectively, with reference numbers 304, 306.

Similarly to the embodiments described above, the solar panel 300 and each absorber device 302 are made by joining a first and a second sheet of metallic material S1, S2 with roll-bond technology, i.e. by joining the sheets S1, S2 at the areas delimiting the closed circuit of each absorber device, in order to inject pressurized air in the regions that define path of the closed circuit to form the internal volumes of the circuit itself.

In correspondence of an area of interface between the evaporation side 304 and the condensation side 306, an adiabatic zone is provided, functionally analogous to the adiabatic zone of the absorber devices described above, designated by the reference numeral 309. and comprising a first and a second thermal interruption 309A, 309B, the first with a rectilinear structure, the second with a "V"-shape. In this way the condensation side essentially has a "step" plan, wherein the step is defined by the thermal interruption with a "V"-shape. It is therefore possible to identify a maximum (longitudinal) extension and a minimum (longitudinal) extension for the condensation side 6, respectively, L_{C}, L_{C}'.

Typical values may be:
- comprised between 1.1 and 3 for L_{C}/L_{C}'

Thermal breaks are preferably made by laser cutting, but it is also possible to create them by means of inserts of thermally insulating material (preferably through with respect to sheets S1, S2) or it is possible to provide a combination of both.

The evaporation side 304 includes a first channel 308 in fluid communication with a plurality of second channels 310 which depart from a first manifold branch 312. In greater detail, channel 308 is in fluid communication with the manifold branch 312 and channels 310 by means of a first siphon duct 313. Channels 308 and 310 have preferably a rectilinear and parallel development, but other solutions are possible, for example of the type shown in Figure 16.

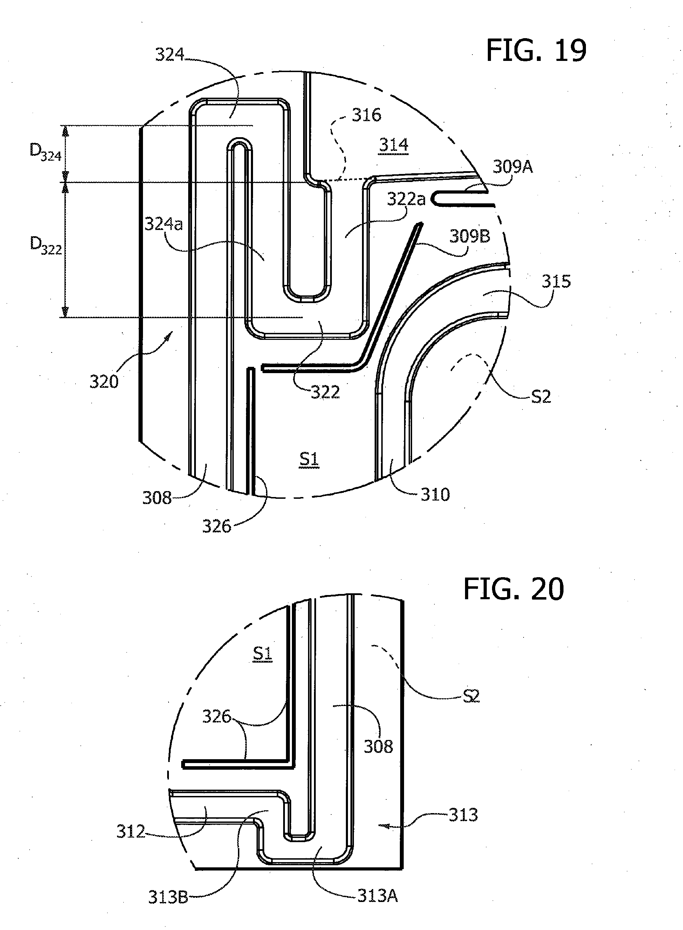

With reference to Figure 20, the siphon duct 313 comprises a first and a second bend 313A, 313B arranged fluid dynamically in series, wherein the first bend 313A has a lower geometric height than the second bend 313B.

Preferably, the first bend 313A creates a curve at an 180° angle, while the second bend 313B preferably creates a curve at an angle of 90°.

In other words, still with reference to Figure 20, channel 308 flows directly in the bend 313A, which essentially creates an inversion of the path of the thermovector fluid compared to channel 308. The bend 313A then flows into the bend 313B, which creates a partial "straightening" of the path of the thermovector fluid by leading into the manifold branch 312, which is preferably transversely orientated with respect to channel 308.

The channels 310 flow into a reservoir 314 through a second manifold branch 315. The second manifold branch 315 is (preferably) transversely orientated with respect to the channels 310 (and 308) and in this embodiment it has an increasing passage area proceeding from the furthest channel 310 to the nearest channel 310 with respect to a common outflow 315A.

Now, the connections between the condensation side 306 and the evaporation side 304 will be described in greater detail, in particular the connections between the reservoir 314 and channels 308, 310.

The first channel 308 and the second channels 310 are in fluid communication with the reservoir 314 by means of, respectively, an outflow port 316 and an inflow port 318, having a higher geometric height than the outflow port 316. Also to be noted is that the reservoir 314 has a bottom 314A inclined towards the outflow port 316, i.e. the bottom 314A has a profile which slopes from the inflow port 318 toward the port 316 in order to facilitate the outflow of the thermovector fluid.

In greater detail, with reference to Figure 19, the channel 308 is in fluid communication with the port 316 by means of a second siphon duct 320, functionally analogous to the siphon ducts previously described, comprising a first and a second bend 322, 324 arranged fluid dynamically in series. The first and second bends 322, 324 define a double-curved path (essentially "S"-shaped), wherein each bend defines a curve preferably of magnitude 180°.

Analogously to the siphon ducts previously described, the duct 320 includes an outflow stretch 322a that departs from the outflow duct 316 and leads into the first bend 322, and an upflow stretch 324a into which the first bend 322 flows, which in turn leads into the second bend 324, which leads directly into the channel 308.

It is also observed that in this embodiment the first bend 322 and the second bend 324 are arranged on opposite sides with respect to the outflow port 316, in particular the bend 324 is located above the port 316.

Analogously to the embodiments described, named D₃₂₂ and D₃₂₄ the distances, respectively, between the reservoir 314 and the bends 322, 324, the distance D₃₂₂ is preferably greater than the distance D₃₂₄, but in this embodiment, owing to the arrangement of the bends, the opposite can also be envisaged.

Finally, each channel 308 is bordered by a thermal interruption 326, preferably having an "L"-shape so as to be also bordered by the siphon duct 313, which can be manufactured for example by laser cutting or by means of an insert of thermally insulating material.

Preferably, the sheets S1, S2 bulge outwards at the closed circuit path of each solar absorber 302 only at the evaporation side 304 (wherein the channels will obviously have a pseudo-elliptical section, resulting from the pneumatic inflation), while at the condensation side 306 only the sheet S1 bulges. In this way the reservoir 314 and the siphon duct 320 are only visible in relief on the sheet S1 while the channels 308, 310, the manifold branches 312, 315 and the siphon duct 313 are visible in relief on both sheets S1, S2.

Regarding the operation, there are a few variations with respect to the embodiments previously described.

In the closed circuit defined by the channels 308, 310, the reservoir 314 and all the connection channels between the above elements, a thermovector fluid circulates which undergoes a first phase change at the evaporation side (liquid-vapour) and a second phase change in the condensation side (vapour-liquid). The solar panel 300 is positioned on a support structure (for example the roof of a building) so that each solar absorber is arranged (preferably) with the reservoir 314 at a higher geometric height than the rest of the circuit. Furthermore, the side corresponding to the sheet S2 is directly exposed to sunlight, so that the sheet S1 essentially remains in the shade (and along with it the reservoir 314 and the siphon duct 320). Moreover, in this way it is possible to apply, for example, a manifold element at the condensation side 306 adapted to convey a fluid, preferably a liquid, in a heat exchange relationship with the thermovector fluid at the condensation side 306. The coupling is favoured by the flat surface of the sheet S2 at the condensation side 306.

The thermovector fluid leaves the reservoir 314 in the liquid phase (helped in part by the profile of the bottom 314A) through the outflow port 316 and runs through the siphon duct 320, then the first channel 308. The latter is adapted to convey the thermovector fluid towards the first manifold branch 312 and to each of the channels 310. It should be noted that the evaporation of thermovector fluid within the channel 308 is avoided or at least hindered by the thermal interruption 326, which limits the conductive thermal exchange with the surrounding portions of the sheets S1, S2. Furthermore the application of a layer of reflective and/or thermally insulating material at the channel 308 is preferably envisaged, as in the embodiments previously described, so as to limit the irradiative heat exchange between the solar radiation and the fluid in the channel 308. Alternatively, the channel 308 may be shaded so as to prevent the solar radiation from reaching it.

When the thermovector fluid enters the channels 310, the solar radiation incident on the absorber 302 transfers heat flow to the thermovector fluid which evaporates and goes back towards the manifold branch 315 and towards the inflow port 318, through which it enters the reservoir 314. When passing through the condensation side 306 the thermovector fluid condenses, transferring heat to the liquid in a heat exchange relationship with the condensation side, which can then be used elsewhere, such as domestic hot water.

Note that the variable passage area of the branch 315 allows to drain off the thermovector fluid flow in an optimal way, because it gradually increases as the branch 315 intercepts a channel 310 closer to the outflow 315A.

In this way, the non-uniformity of the field of motion of the thermovector fluid within the circuit are limited.

The cycle then repeats itself during the operation of each solar absorber 302, which is interrupted - as described - when the temperature difference between the condensation side and the evaporation side is close to zero.

The presence of the siphon ducts 313 and 320 is also very important from the perspective of maintaining the controllability of the heat flow exchanged even under harsh operating conditions. Analogously to the siphon ducts previously described, the siphon duct 320 guarantees, thanks to its geometry, the presence of thermovector fluid in the liquid phase in a stretch between the reservoir 314 and the second bend 324.

The siphon duct 313 also provides a further

contribution from in view of the maintenance of a certain amount of thermovector fluid in the liquid phase also downstream of channel 308 and immediately upstream of channels 310. In particular, thanks to the siphon duct 313 it is possible to maintain thermovector fluid in the liquid phase at least in the first bend 313A and upstream thereof, i.e. in the channel 308.

In alternative embodiments, it is possible to envisage the presence of the sole siphon duct 313. The same can also be applied to the layouts of closed circuit previously described, with which it is also possible to implement a solution with two distinct siphons of the type described in Figure 18.

Essentially, in the various embodiments presented herein, each solar absorber device comprises a reservoir which is in communication with one or more channels adapted to convey the thermovector fluid in the vapour phase ("vapour channel(s)") thereto by means of one or more siphon ducts. The one or more vapour channels also lead into the reservoir itself via one or more inflow ports with respect to which the one or more siphon ducts are fluid dynamically arranged upstream.

The aforesaid siphon ducts are arranged upstream of said one or more vapour channels and may be provided at the outflow of the reservoir upstream of the channel adapted to receive the thermovector fluid in liquid phase ("liquid channel") or downstream of it (and upstream of the vapour channel(s)) or in both places. In the first case the siphon duct is connected to the outflow port of the reservoir and flows into the liquid channel, connecting and setting in fluid communication the liquid channel and the reservoir (notwithstanding of course the fluid communication that is established between the reservoir and the vapour channel(s)).

In the second case the siphon duct connects and establishes fluid communication between the liquid channel and the vapour channel(s) (possibly through the manifold branch 312, if present), since it is arranged at an interface zone between them.

## Claims

1. A solar absorber device (2; 2'; 2"; 102; 202; 302) comprising a closed circuit arranged for the circulation of a thermovector fluid, said closed circuit comprising:
- an evaporation side (4; 4'; 4"; 104; 204; 304) of said thermovector fluid, and
- a condensation side (6; 6'; 6"; 106; 206; 306) of said thermovector fluid,
wherein, furthermore:
- the solar absorber device (2; 2'; 2"; 102; 202; 302) comprises a first and a second sheet made of metal material (S1, S2) connected to each other in correspondence of areas delimiting said closed circuit,
- the evaporation side (4; 4'; 4"; 104; 204; 304) comprises a first and at least one second channel (8, 10; 108, 110; 208, 210; 308, 310) wherein said at least one second channel (10; 110; 210; 310) is in fluid communication with said first channel (8; 108; 208; 308),
- said first channel (8; 108; 208; 308) is adapted to receive the thermovector fluid from said condensation side (6; 6'; 6"; 206; 306) in liquid phase and it is adapted to convey said thermovector fluid towards said at least one second channel (10; 110; 210; 310),
- said at least one second channel (10; 110; 210; 310) is adapted to receive the thermovector fluid from said first channel (8; 108; 208; 308) and it is adapted to convey said thermovector fluid towards said condensation side (6; 6'; 6"; 106; 206; 306) in vapour phase,
- the solar absorber device (2; 2'; 2"; 102; 202; 302) been **characterized in that** in said condensation side (6; 6'; 6"; 106; 206; 306) comprises a reservoir (14; 14'; 114; 214; 314) in fluid communication with said first and at least one second channels (8, 10; 108, 110; 208, 210; 308, 310) respectively in correspondence of an outflow port (16; 16'; 116A; 116B; 216; 316) and at least one inflow port (18, 18'; 118; 218; 318), and
- **in that** said at least one second channel (10; 110; 210; 310) is in fluid communication with said reservoir (14; 14'; 114; 214; 314) by means of at least one siphon duct (20, 20'; 120; 220; 313; 320) comprising a first and a second bends (22, 24; 122, 124; 222, 224; 322, 324) arranged fluid dynamically in series.

2. The solar absorber device (2; 2'; 2"; 102; 202; 302) according to Claim 1, **characterized in that** said at least one siphon duct (20, 20'; 120; 220; 313; 320) is arranged fluid dynamically upstream of said inflow port (18, 18'; 118; 218; 318) and furthermore establishes a fluid communication between said at least one second channel (10; 110; 210; 310) and said outflow port (16; 16'; 116A; 116B; 216; 316).

3. The solar absorber device (2; 2'; 2"; 102; 202; 302) according to Claim 2, **characterized in that** it comprises a siphon duct (20, 20'; 120; 220; 320) arranged upstream of said first channel (8; 108; 208; 308) and connecting said first channel to said outflow port (16; 16'; 116A; 116B; 216; 316)

4. The solar absorber device (302) according to Claim 3, **characterized in that** it comprises a further siphon duct (313) arranged downstream of said first channel (308) in correspondence of an interface between said first and at least one second channel (308, 310).

5. The solar absorber device (302) according to any of the preceding claims, **characterized in that** said reservoir (314) comprises a bottom (314A) inclined towards said outflow port (316).

6. The solar absorber device (2 ;2'; 2"; 102; 202) according to any of Claims 2 to 5, **characterized in that** said siphon duct (20; 20'; 120; 220; 320) comprises:
- an outflow stretch (22a; 122a; 222a; 322a) in fluid communication with said outflow port (16; 16'; 116A, 116B; 216; 316) and leading into said first bend (22; 122; 222; 322),
- an upflow stretch (24a; 124a; 224a; 324a) in fluid communication with said first bend (22; 122; 222; 322) and leading into said second bend (24; 124; 224; 324), wherein said second bend (24; 124; 224; 324) leads into said first channel (8; 108; 208; 308).

7. The solar absorber device (2; 2'; 2"; 102; 202; 302) according to claim 3, **characterized in that** said first and second bends (22, 24; 122, 124; 222, 224; 322, 324) of said siphon duct (20; 20'; 120; 220; 320) describe curves having an extension substantially equal to 180°.

8. The solar absorber device (302) according to Claim 4, **characterized in that** the first and the second bends (322, 324) of said further siphon duct (313) describe curves having an extension substantially equal to 180° and 90°, respectively.

9. The solar absorber device (302) according to Claim 4 or Claim 8, **characterized in that** said closed circuit comprises a first channel (308) and a plurality of second channels (310) in fluid communication with said first channel (308) and with said reservoir (314), respectively, by means of a first and a second manifold branch (312, 315), and
**in that** said further siphon duct (313) is arranged between and sets in fluid communication said first channel (308) with said first manifold branch (312).

10. The solar absorber device (2; 2'; 102; 202; 302) according to any of the preceding Claims, **characterized in that** it comprises one or more thermal interruptions (26, 28; 28'; 126, 128; 226, 228; 326) located along said first channel (8; 108; 208; 308), preferably along at least one side thereof, said thermal interruptions (26, 28; 28'; 126, 128; 226, 228; 326) comprising interruptions obtained by means of laser cut, inserts made of thermal isolating material or both.

11. The solar absorber device (2; 2'; 2"; 102; 202; 302) according to any of the preceding Claims, **characterized in that** at least one of said first and second sheet made of metal material (S1, S2) is covered, in correspondence of the path of said first channel (8; 108; 208; 308) with reflecting material or thermally insulating material or thermally insulating and reflecting material.

12. The solar absorber device (2; 2'; 2"; 102; 202; 302) according to Claim 1, **characterized in that** said first and second sheet made of metal material (S1, S2) are both bulging outwards in correspondence of the path or said first and second channels (8, 10; 108, 110; 208, 210; 308, 310) on said evaporation side (4; 4'; 4"; 104 ;204; 304).

13. The solar absorber device (2; 2'; 2"; 102; 202; 302) according to Claim 3, **characterized in that** in correspondence of said reservoir (14; 14'; 114; 214; 314) and said siphon duct (20; 20'; 120; 220; 320) only said first sheet made of metal material (S1) is bulging outwards, said reservoir (14; 14'; 114; 214; 314) and said siphon duct (20; 20'; 120; 220; 320) being provided within said condensation side (6; 6'; 6"; 106; 206; 306).

14. The solar absorber device (2; 2'; 2"; 102; 202; 302) according to Claim 1, **characterized in that** only one (S1) of said first and second sheet made of metal material is bulging outwards in correspondence of said first and second channels (8, 10; 108, 110; 208, 210; 308, 310), of said reservoir (14; 14'; 114; 214; 314) and of said at least one siphon duct (20; 20'; 120; 220; 313; 320) both in correspondence of said evaporation side (4; 4'; 4"; 104; 204; 304) and in correspondence of said condensation side (6; 6'; 6"; 106; 206; 306).

15. A solar panel (1; 1'; 1"; 100; 200; 300) comprising one or more solar absorber devices (2; 2'; 2"; 102; 202; 302) according to any of Claims 1 to 14.

16. The solar panel (1; 1'; 1"; 100; 200; 300) according to Claim 15, furthermore comprising a header adapted to contain fluid, preferably a liquid, -preferably water, in thermal exchange relationship with said condensation side (6; 6'; 6"; 106; 206; 306) of said solar absorber device (2; 2'; 2"; 102; 202; 302).

## Patentansprüche

1. Solarabsorber (2; 2'; 2"; 102; 202; 302), umfassend einen geschlossenen Kreislauf, der zur Zirkulation eines Thermovektorfluids eingerichtet ist, wobei der geschlossene Kreislauf umfasst:
- eine Verdampfungsseite (4; 4'; 4"; 104; 204; 304) des Thermovektorfluids, und
- eine Kondensationsseite (6; 6'; 6"; 106; 206; 306) des Thermovektorfluids, wobei außerdem:
- der Solarabsorber (2; 2'; 2"; 102; 202; 302) ein erstes und ein zweites Blech aus einem Metallwerkstoff (S1, S2) aufweist, die im Bereich von den geschlossenen Kreislauf abgrenzenden Flächen miteinander verbunden sind,
- die Verdampfungsseite (4; 4'; 4"; 104; 204; 304) einen ersten und mindestens einen zweiten Kanal (8, 10; 108, 110; 208, 210; 308, 310) umfasst, wobei sich der mindestens eine zweite Kanal (10; 110; 210; 310) mit dem ersten Kanal (8; 108'; 208; 308) in flüssigkeitsleitender Verbindung befindet,
- der erste Kanal (8; 108; 208; 308) das Thermovektorfluid in flüssiger Phase von der Kondensationsseite (6; 6'; 6"; 206; 306) aufnehmen soll und so gestaltet ist, dass er das Thermovektorfluid in Richtung des mindestens einen zweiten Kanals (10; 110; 210; 310) zuführt,
- der mindestens eine zweite Kanal (10; 110; 210; 310) das Thermovektorfluid von dem ersten Kanal (8; 108; 208; 308) aufnehmen soll und so gestaltet ist, dass er das Thermovektorfluid in Dampfphase in Richtung der Kondensationsseite (6; 6'; 6"; 106; 206; 306) zuführt,
- der Solarabsorber (2; 2'; 2"; 102; 202; 302) **dadurch gekennzeichnet ist, dass** die Kondensationsseite (6; 6'; 6"; 106; 206; 306) einen Behälter (14; 14'; 114; 214; 314) in flüssigkeitsleitender Verbindung mit dem ersten bzw. mindestens einen zweiten Kanal (8, 10; 108, 110; 208, 210; 308, 310) im Bereich eines Ausströmanschlusses (16; 16'; 116A; 116B; 216; 316) und mindestens eines Einströmanschlusses (18, 18'; 118; 218; 318) aufweist, und
- dadurch, dass sich der mindestens eine zweite Kanal (10; 110; 210; 310) mit dem Behälter (14; 14'; 114; 214; 314) durch mindestens eine Heberleitung (20, 20'; 120; 220; 313; 320) in flüssigkeitsleitender Verbindung befindet, die eine erste und eine zweite Krümmung (22, 24; 122, 124; 222, 224; 322, 324), die der Reihe nach fluiddynamisch angeordnet sind, aufweist.

2. Solarabsorber (2; 2'; 2"; 102; 202; 302) nach Anspruch 1, **dadurch gekennzeichnet, dass** die mindestens eine Heberleitung (20, 20'; 120; 220; 313; 320) vor dem Einströmanschluss (18, 18'; 118; 218; 318) fluiddynamisch angeordnet ist und außerdem eine flüssigkeitsleitende Verbindung zwischen dem mindestens einen zweiten Kanal (10; 110; 210; 310) und dem Ausströmanschluss (16; 16'; 116A; 116B; 216; 316) bildet.

3. Solarabsorber (2; 2'; 2"; 102; 202; 302) nach Anspruch 2, **dadurch gekennzeichnet, dass** er eine Heberleitung (20, 20'; 120; 220; 320) aufweist, die vor dem ersten Kanal (8; 108; 208; 308) angeordnet ist und den ersten Kanal mit dem Ausströmanschluss (16; 16'; 116A; 116B; 216; 316) verbindet.

4. Solarabsorber (302) nach Anspruch 3, **dadurch gekennzeichnet, dass** er eine weitere Heberleitung (313) aufweist, die nach dem ersten Kanal (308) im Bereich einer Schnittstelle zwischen dem ersten und mindestens einen zweiten Kanal (308, 310) angeordnet ist.

5. Solarabsorber (302) nach einem der vorhergehenden Ansprüche, **dadurch gekennzeichnet, dass** der Behälter (314) einen Boden (314A) aufweist, der in Richtung des Ausströmanschlusses (316) geneigt ist.

6. Solarabsorber (2; 2'; 2"; 102; 202) nach einem der Ansprüche 2 bis 5, **dadurch gekennzeichnet, dass** die Heberleitung (20; 20'; 120; 220; 320) umfasst:
- eine Ausflussstrecke (22a; 122a; 222a; 322a) in flüssigkeitsleitender Verbindung mit dem Ausströmanschluss (16; 16'; 116A, 116B; 216; 316) und die in die erste Krümmung (22; 122; 222; 322) führt,
- eine aufwärts durchströmte Strecke (24a; 124a; 224a; 324a) in flüssigkeitsleitender Verbindung mit der ersten Krümmung (22; 122; 222; 322) und die in die zweite Krümmung (24; 124; 224; 324) führt, wobei die zweite Krümmung (24; 124; 224; 324) in den ersten Kanal (8; 108; 208; 308) führt.

7. Solarabsorber (2; 2'; 2"; 102; 202; 302) nach Anspruch 3, **dadurch gekennzeichnet, dass** die erste und die zweite Krümmung (22, 24; 122, 124; 222, 224; 322, 324) der Heberleitung (20; 20'; 120; 220; 320) Kurven mit einer Ausdehnung beschreiben, die im Wesentlichen gleich 180° ist.

8. Solarabsorber (302) nach Anspruch 4, **dadurch gekennzeichnet, dass** die erste und die zweite Krümmung (322, 324) der weiteren Heberleitung (313) Kurven mit einer Ausdehnung beschreiben, die im Wesentlichen gleich 180° bzw. 90° ist.

9. Solarabsorber (302) nach Anspruch 4 oder Anspruch 8, **dadurch gekennzeichnet, dass** der geschlossene Kreislauf einen ersten Kanal (308) und eine Vielzahl von zweiten Kanälen (310) in flüssigkeitsleitender Verbindung mit dem ersten Kanal (308) bzw. mit dem Behälter (314) durch eine erste und eine zweite Rohrverzweigung (312, 315) aufweist, und
dadurch, dass die weitere Heberleitung (313) zwischen dem ersten Kanal (308) mit der ersten Rohrverzweigung (312) angeordnet und in flüssigkeitsleitender Verbindung damit gesetzt ist.

10. Solarabsorber (2; 2'; 102; 202; 302) nach einem der vorhergehenden Ansprüche, **dadurch gekennzeichnet, dass** er eine oder mehrere thermische Unterbrechungen (26, 28; 28'; 126, 128; 226, 228; 326) aufweist, die an dem ersten Kanal (8; 108; 208; 308) entlang, vorzugsweise entlang mindestens einer Seite davon angeordnet sind, wobei die thermischen Unterbrechungen (26, 28; 28'; 126, 128; 226, 228; 326) durch Laserschnitt erzielte Unterbrechungen, Einsätze aus thermischem Isolierwerkstoff oder beides umfassen.

11. Solarabsorber (2; 2'; 2"; 102; 202; 302) nach einem der vorhergehenden Ansprüche, **dadurch gekennzeichnet, dass** zumindest eines des ersten und des zweiten Blechs aus Metallwerkstoff (S1, S2) im Bereich der Strecke des ersten Kanals (8; 108; 208; 308) mit einem reflektierenden Werkstoff oder einem thermisch isolierenden Werkstoff oder einem thermisch isolierenden und reflektierenden Werkstoff überzogen ist.

12. Solarabsorber (2; 2'; 2"; 102; 202; 302) nach Anspruch 1, **dadurch gekennzeichnet, dass** das erste und das zweite Blech aus Metallwerkstoff (S1, S2) sich beide im Bereich der Strecke des ersten und des zweiten Kanals (8, 10; 108, 110; 208, 210; 308, 310) auf der Verdampfungsseite (4; 4'; 4"; 104; 204; 304) nach außen aufwölben.

13. Solarabsorber (2; 2'; 2"; 102; 202; 302) nach Anspruch 3, **dadurch gekennzeichnet, dass** im Bereich des Behälters (14; 14'; 114; 214; 314) und der Heberleitung (20; 20'; 120; 220; 320) sich nur das erste Blech aus Metallwerkstoff (S1) nach außen aufwölbt, wobei der Behälter (14; 14'; 114; 214; 314) und die Heberleitung (20; 20'; 120; 220; 320) innerhalb der Kondensationsseite (6; 6'; 6"; 106; 206; 306) vorgesehen sind.

14. Solarabsorber (2; 2'; 2"; 102; 202; 302) nach Anspruch 1, **dadurch gekennzeichnet, dass** sich nur eines (S1) des ersten und zweiten Blechs aus Metallwerkstoff im Bereich des ersten und des zweiten Kanals (8, 10; 108, 110; 208, 210; 308, 310), des Behälters (14; 14'; 114; 214; 314) und der mindestens einen Heberleitung (20; 20'; 120; 220; 313; 320), beide im Bereich der Verdampfungsseite (4; 4'; 4"; 104; 204; 304) und im Bereich der Kondensationsseite (6; 6'; 6"; 106; 206; 306), nach außen aufwölbt.

15. Solarpanel (1; 1'; 1"; 100; 200; 300), umfassend einen oder mehrere Solarabsorber (2; 2'; 2"; 102; 202; 302) nach einem der Ansprüche 1 bis 14.

16. Solarpanel (1; 1'; 1"; 100; 200; 300) nach Anspruch 15, außerdem umfassend eine Aufnahmevorrichtung, die Fluid aufnehmen soll, vorzugsweise eine Flüssigkeit, vorzugsweise Wasser, in thermischer Austauschbeziehung mit der Kondensationsseite (6; 6'; 6"; 106; 206; 306) des Solarabsorbers (2; 2'; 2"; 102; 202; 302).

## Revendications

1. Dispositif d'absorption d'énergie solaire (2 ; 2' ; 2" ; 102 ; 202 ; 302) comprenant un circuit fermé agencé pour la circulation d'un fluide thermovecteur, ledit circuit fermé comprenant :
- un côté d'évaporation (4; 4'; 4"; 104; 204; 304) dudit fluide thermovecteur, et
- un côté de condensation (6; 6'; 6"; 106; 206; 306) dudit fluide thermovecteur,
dans lequel, en outre :
- le dispositif d'absorption d'énergie solaire (2 ; 2' ; 2" ; 102 ; 202 ; 302) comprend au moins une première et une seconde feuille constituée d'un matériau métallique (S1, S2) connectées l'une à l'autre en correspondance avec des zones délimitant ledit circuit fermé,
- le côté d'évaporation (4 ; 4' ; 4" ; 104 ; 204 ; 304) comprend un premier et au moins un second canal (8, 10 ; 108, 110 ; 208, 210 ; 308, 310), ledit au moins un second canal (10 ; 110 ; 210 ; 310) étant en communication fluidique avec ledit premier canal (8 ; 108 ; 208 ; 308),
- ledit premier canal (8 ; 108 ; 208 ; 308) est conçu pour recevoir le fluide thermovecteur depuis ledit côté de condensation (6 ; 6' ; 6" ; 206 ; 306) en phase liquide et est conçu pour acheminer ledit fluide thermovecteur vers ledit au moins un second canal (10 ; 110 ; 210 ; 310),
- ledit au moins un second canal (10 ; 110 ; 210 ; 310) est conçu pour recevoir le fluide thermovecteur dudit premier canal (8 ; 108 ; 208 ; 308) et est conçu pour acheminer ledit fluide thermovecteur vers ledit côté de condensation (6 ; 6' ; 6" ; 106 ; 206 ; 306) en phase vapeur,
- le dispositif d'absorption d'énergie solaire (2 ; 2' ; 2" ; 102 ; 202 ; 302) étant **caractérisé en ce que** ledit côté de condensation (6 ; 6' ; 6" ; 106 ; 206 ; 306) comprend un réservoir (14; 14'; 114; 214; 314) en communication fluidique avec lesdits premier et au moins un second canaux (8, 10 ; 108, 110 ; 208, 210; 308, 310) respectivement en correspondance avec un orifice de sortie (16 ; 16' ; 116A; 116B ; 216 ; 316) et au moins un orifice d'entrée (18, 18'; 118 ; 218 ; 318), et
- **en ce que** ledit au moins un second canal (10 ; 110 ; 210 ; 310) est en communication fluidique avec ledit réservoir (14; 14'; 114; 214; 314) au moyen d'au moins une gaine de siphon (20, 20'; 120; 220; 313; 320) comprenant un premier et un second coudes (22, 24 ; 122, 124 ; 222, 224 ; 322, 324) agencés de manière fluidiquement dynamique en série.

2. Dispositif d'absorption d'énergie solaire (2 ; 2' ; 2" ; 102 ; 202 ; 302) selon la revendication 1, **caractérisé en ce que** ladite au moins une gaine de siphon (20, 20' ; 120 ; 220 ; 313 ; 320) est agencée de manière fluidiquement dynamique en amont dudit orifice d'entrée (18, 18' ; 118 ; 218 ; 318) et établit en outre une communication fluidique entre ledit au moins un second canal (10 ; 110; 210; 310) et ledit orifice de sortie (16; 16' ; 116A ; 116B ; 216 ; 316).

3. Dispositif d'absorption d'énergie solaire (2 ; 2' ; 2" ; 102 ; 202 ; 302) selon la revendication 2, **caractérisé en ce qu'**il comprend une gaine de siphon (20, 20' ; 120 ; 220 ; 320) agencée en amont dudit premier canal (8 ; 108 ; 208 ; 308) et reliant ledit premier canal audit orifice de sortie (16 ; 16' ; 116A ; 116B ; 216 ; 316).

4. Dispositif d'absorption d'énergie solaire (302) selon la revendication 3, **caractérisé en ce qu'**il comprend une autre gaine de siphon (313) agencée en aval dudit premier canal (308) en correspondance avec une interface entre lesdits premier et au moins un second canaux (308, 310).

5. Dispositif d'absorption d'énergie solaire (302) selon l'une quelconque des revendications précédentes, **caractérisé en ce que** ledit réservoir (314) comprend un fond (314A) incliné vers ledit orifice de sortie (316).

6. Dispositif d'absorption d'énergie solaire (2 ; 2' ; 2" ; 102 ; 202) selon l'une quelconque des revendications 2 à 5, **caractérisé en ce que** ladite gaine de siphon (20 ; 20' ; 120 ; 220 ; 320) comprend :
- un passage de sortie (22a; 122a; 222a; 322a) en communication fluidique avec ledit orifice de sortie (16; 16'; 116A, 116B ; 216; 316) et conduisant audit premier coude (22 ; 122 ; 222 ; 322),
- un passage de remontée (24a ; 124a ; 224a ; 324a) en communication fluidique avec ledit premier coude (22 ; 122 ; 222 ; 322) et conduisant audit second coude (24 ; 124 ; 224 ; 324), ledit second coude (24 ; 124 ; 224 ; 324) conduisant audit premier canal (8 ; 108 ; 208 ; 308).

7. Dispositif d'absorption d'énergie solaire (2 ; 2' ; 2" ; 102 ; 202 ; 302) selon la revendication 3, **caractérisé en ce que** lesdits premier et second coudes (22, 24 ; 122, 124 ; 222, 224 ; 322, 324) de ladite gaine de siphon (20 ; 20' ; 120 ; 220 ; 320) décrivent des courbes ayant une extension sensiblement égale à 180°.

8. Dispositif d'absorption d'énergie solaire (302) selon la revendication 4, **caractérisé en ce que** les premier et second coudes (322, 324) de ladite autre gaine de siphon (313) décrivent des courbes ayant une extension sensiblement égale à 180° et 90°, respectivement.

9. Dispositif d'absorption d'énergie solaire (302) selon la revendication 4 ou la revendication 8, **caractérisé en ce que** ledit circuit fermé comprend un premier canal (308) et une pluralité de seconds canaux (310) en communication fluidique avec ledit premier canal (308) et avec ledit réservoir (314), respectivement, au moyen d'un premier et d'un second branchement de collecteur (312, 315), et
**en ce que** ladite autre gaine de siphon (313) est agencée entre et place en communication fluidique ledit premier canal (308) avec ledit premier branchement de collecteur (312).

10. Dispositif d'absorption d'énergie solaire (2; 2'; 102; 202; 302) selon l'une quelconque des revendications précédentes, **caractérisé en ce qu'**il comprend une ou plusieurs interruptions thermiques (26, 28 ; 28' ; 126, 128 ; 226, 228 ; 326) situées le long dudit premier canal (8 ; 108 ; 208 ; 308), de préférence le long d'au moins un côté de celui-ci, lesdites interruptions thermiques (26, 28; 28'; 126, 128; 226, 228; 326) comprenant des interruptions obtenues au moyen d'une découpe au laser, d'inserts constitués de matériau thermo-isolant ou des deux.

11. Dispositif d'absorption d'énergie solaire (2 ; 2' ; 2" ; 102 ; 202 ; 302) selon l'une quelconque des revendications précédentes, **caractérisé en ce qu'**au moins l'une desdites première et seconde feuilles constituée de matériau métallique (S1, S2) est couverte, en correspondance avec le trajet dudit premier canal (8 ; 108 ; 208 ; 308) avec un matériau réfléchissant ou un matériau thermo-isolant ou un matériau thermo-isolant et réfléchissant.

12. Dispositif d'absorption d'énergie solaire (2 ; 2' ; 2" ; 102 ; 202 ; 302) selon la revendication 1, **caractérisé en ce que** lesdites première et seconde feuilles constituées de matériau métallique (S1, S2) sont toutes deux bombées vers l'extérieur en correspondance avec le trajet desdits premier et second canaux (8, 10 ; 108, 110 ; 208, 210 ; 308, 310) sur ledit côté d'évaporation (4 ; 4' ; 4" ; 104 ;204 ; 304).

13. Dispositif d'absorption d'énergie solaire (2 ; 2' ; 2" ; 102 ; 202 ; 302) selon la revendication 3, **caractérisé en ce qu'**en correspondance avec ledit réservoir (14 ; 14' ; 114 ; 214 ; 314) et ladite gaine de siphon (20 ; 20' ; 120 ; 220 ; 320) seule ladite première feuille constituée de matériau métallique (S1) est bombée vers l'extérieur, ledit réservoir (14 ; 14' ; 114 ; 214 ; 314) et ladite gaine de siphon (20 ; 20' ; 120 ; 220 ; 320) étant prévus à l'intérieur dudit côté de condensation (6 ; 6' ; 6" ; 106 ; 206 ; 306).

14. Dispositif d'absorption d'énergie solaire (2 ; 2' ; 2" ; 102 ; 202 ; 302) selon la revendication 1, **caractérisé en ce qu'**une seule (S1) desdites première et seconde feuilles constituées de matériau métallique est bombée vers l'extérieur en correspondance avec lesdits premier et second canaux (8, 10 ; 108, 110 ; 208, 210 ; 308, 310), ledit réservoir (14 ; 14' ; 114 ; 214 ; 314) et ladite au moins une gaine de siphon (20 ; 20' ; 120 ; 220 ; 313 ; 320) à la fois en correspondance avec ledit côté d'évaporation (4 ; 4' ; 4" ; 104 ; 204 ; 304) et en correspondance avec ledit côté de condensation (6 ; 6' ; 6" ; 106 ; 206 ; 306).

15. Panneau solaire (1 ; 1'; 1"; 100; 200; 300) comprenant un ou plusieurs dispositifs d'absorption d'énergie solaire (2 ; 2' ; 2" ; 102 ; 202 ; 302) selon l'une quelconque des revendications 1 à 14.

16. Panneau solaire (1 ; 1'; 1"; 100 ; 200; 300) selon la revendication 15, comprenant en outre un collecteur conçu pour contenir du fluide, de préférence un liquide, de préférence de l'eau, dans une relation d'échange thermique avec ledit côté de condensation (6 ; 6' ; 6" ; 106 ; 206 ; 306) dudit dispositif d'absorption d'énergie solaire (2 ; 2' ; 2" ; 102 ; 202 ; 302).
